**Europäisches Patentamt**

**European Patent Office**

**Office européen des brevets**

(19)

(11) Veröffentlichungsnummer : **0 143 168**
**B1**

(12) **EUROPÄISCHE PATENTSCHRIFT**

(45) Veröffentlichungstag der Patentschrift :
12.11.86

(51) Int. Cl.⁴ : **B 65 G 57/24**

(21) Anmeldenummer : **84108514.5**

(22) Anmeldetag : **19.07.84**

(54) Vorrichtung zum Ablegen von Sackverbundschichten.

(30) Priorität : **27.10.83 DE 3338966**

(43) Veröffentlichungstag der Anmeldung :
**05.06.85 Patentblatt 85/23**

(45) Bekanntmachung des Hinweises auf die Patenterteilung : **12.11.86 Patentblatt 86/46**

(84) Benannte Vertragsstaaten :
**AT BE CH DE FR GB IT LI NL SE**

(56) Entgegenhaltungen :
DE-A- 2 713 135
DE-B- 1 275 468

(73) Patentinhaber : **Möllers Maschinenfabrik GmbH**
**Sudhoferweg 93**
**D-4720 Beckum (DE)**

(72) Erfinder : **Birkenfeld, Richard**
**Südring 24**
**D-4720 Beckum (DE)**
Erfinder : **Frische, Karl**
**Aulkeweg 5**
**D-4740 Oelde 4 (DE)**
Erfinder : **Koepp, Manfred**
**Köster Roeren Strasse 5**
**D-4730 Ahlen (DE)**

(74) Vertreter : **Patentanwälte Meinke und Dabringhaus**
**Dipl.-Ing. J. Meinke Dipl.-Ing. W. Dabringhaus**
**Westenheliweg 67**
**D-4600 Dortmund 1 (DE)**

### Beschreibung

Die Erfindung betrifft eine Vorrichtung zum Ablegen von Sackverbundschichten mit einer horizontal zurückziehbaren Tragfläche und einer im wesentlichen vertikal gerichteten, während des Zurückziehens der Tragfläche stationär verbleibenden Anschlagfläche, durch deren Wirkung die Sackverbundschicht von der Tragfläche bei deren horizontalem Zurückziehen abschiebbar ist, wobei oberhalb der auf der Tragfläche ruhenden Sackverbundschicht ein vertikal bewegliches Festhalteorgan angeordnet ist, mittels dessen die Sackverbundschicht bei entsprechend abgesenktem Festhalteorgan während des Zurückziehens der Tragfläche festhaltbar ist.

Bei einer bekannten Vorrichtung dieser Art (US-A-3 164 080), bei der es sich um eine stationäre Palettiervorrichtung handelt, bei der einzeln ankommende Säcke auf eine zunächst nur teilweise senkrecht zur Anförderrichtung der Einzelsäcke vorgeschobene, von Förderrollen gebildete, horizontale Tragfläche gegen eine stationäre Anhalteplatte gefördert werden, worauf nach Bildung einer Reihe von Einzelsäcken die Tragfläche vollständig vorgeschoben wird und dann eine weitere Reihe von um 90° gegenüber den Einzelsäcken der ersten Reihe verdrehten Einzelsäcken der Tragfläche bis zum Anschlag an die Anhalteplatte zugeführt wird, worauf dann die parallel zur Zuförderrichtung der Einzelsäcke und senkrecht zur diese anhaltenden Anhalteplatte angeordnete Anschlagfläche beim Zurückziehen der Tragfläche die Sackverbundschicht auf eine darunter befindliche, stufenweise um die Höhe einer Sackverbundschicht absenkbare Hubplattform bzw. auf eine vorhergehend schon auf diese abgelegte Sackverbundschicht ablegt, ist vor dem Zurückziehen der Tragfläche eine oberhalb derselben sich über die volle Grundfläche derselben erstreckende Platte auf die Sackverbundschicht absenkbar und anpreßbar, um diese Oberfläche zu glätten und um Aufstauchungen einzelner Säcke beim Zurückziehen der Tragfläche an der zum Ablegen der Sackverbundschicht dienenden Anschlagfläche zu verhindern. Die bekannte Vorrichtung erfordert allerdings einen relativ großen Aufwand für das Festhalteorgan, da sich die dieses bildende absenkbare Platte über die gesamte Grundfläche der abzulegenden Sackverbundschicht erstreckt und wird dabei nicht der besonderen Problematik gerecht, welche sich dadurch ergibt, daß einzelne Säcke der betreffenden Sackverbundschicht besonders stauchgefährdet sind, nämlich diejenigen im Eck- bzw. Winkelbereich zwischen der die Einzelsäcke stoppenden Anhalteplatte und der an diese senkrecht angrenzenden Anschlagfläche zum Abstreifen der abzulegenden Sackverbundschicht. Infolgedessen besteht die Gefahr, daß die in diesem Winkelbereich besonders aufgestauchten und anschließend durch die absenkbare Druckplatte komprimierten Säcke in diesem Eckbereich des aus den einzelnen Sackverbundschichten auf einer Palette gebildeten Stapels überhängen bzw. einen besonderen Masseschwerpunkt bilden, was sich von Lage zu Lage verstärkt, so daß sich insgesamt ein ecklastiger Stapel ergibt, was dessen Stabilität und Standfestigkeit gefährdet.

Aufgabe der Erfindung ist die Schaffung einer Lösung, welche unter Vereinfachung der bekannten Vorrichtung mit die gesamte Sackverbundschicht festhaltendem Festhalteorgan funktionsmäßig besonders günstig an Vorrichtungen angepaßt ist, bei denen Einzelsäcke der Sackverbundschicht beim Zurückziehen der diese tragenden Tragfläche besonders stauchgefährdet sind bzw. zu unerwünschten Lageveränderungen neigen.

Bei einer Vorrichtung der eingangs bezeichneten Art wird diese Aufgabe gemäß der Erfindung dadurch gelöst, daß das Festhalteorgan zweiteilig ausgebildet und jeweils ein Teil in jedem Seitenbereich der Tragfläche angeordnet ist, wobei die Seitenbereiche von Rahmenteilen begrenzt sind, denen die seitlich äußeren Säcke der Sackverbundschicht beim parallel zu den Rahmenseitenteilen erfolgenden Rückziehen der Tragfläche anliegen.

Aufgrund dieser Ausbildung wird der Neigung der den Rahmenseitenteilen anliegenden äußeren Säcke der Sackverbundschicht von vornherein entgegengewirkt, sich beim Zurückziehen der Tragfläche infolge der zwischen diesen Säcken und den Rahmenseitenteilen auftretenden Reibungskräfte zu verkanten, d. h. mit ihren den Rahmenseitenteilen anliegenden Bereichen zurückzubleiben, was zu Unregelmäßigkeiten bei der Anlage an die Anschlagfläche führen könnte, die sich dann auch auf die weiter innenliegenden Säcke fortpflanzen würden, was sich beim aufeinanderfolgenden Ablegen von Sackschichten ungünstig derart addieren könnte, daß der fertige Stapel instabil würde. Es hat sich nun gezeigt, daß, wenn man die äußeren Säcke gezielt festhält, diese Erscheinungen fast völlig vermeidbar sind, so daß man mit geringem apparativen Aufwand ein ausgezeichnetes Ergebnis erhält, insbesondere vermieden wird, daß sich Komprimierungen in bestimmten Bereichen der Sackverbundschicht ergeben. Von besonderer Bedeutung ist die erfindungsgemäße Ausbildung bei sogenannten Autobeladern, bei denen Sackverbundschichten mit wesentlich größerer Breitenerstreckung als Erstreckung in Rückziehrichtung der Tragfläche abgegeben werden, wie z. B. gemäß DE-PS 25 16 957 und DE-OS 27 13 135. Hier würde ein sich über die gesamte Grundfläche der abzulegenden Sackverbundschicht erstreckendes Festhalteorgan einen unwirtschaftlich hohen Aufwand erfordern und dennoch nicht die gezielte Festhaltefunktion an besonders gefährdeten Einzelsäcken der Sackverbundschicht erreichen, wie bei der erfindungsgemäßen Ausgestaltung.

Dabei kann das Festhalteorgan mit sich quer zur Verschiebungsrichtung der Tragfläche erstreckenden Stangen oder sonstigen Vorsprüngen an seiner der Sackverbundschicht zugewandten Seite derart versehen sein, daß die jeweils der Anschlagfläche zugewandten Enden querliegender Säcke — welche aus den vorstehend dargelegten Gründen besonders verformungsgefährdet sind — durch beim Absenken der betreffenden Stangen oder sonstigen Vorsprünge erfolgendes Einkerben in die betreffenden Enden der Säcke festhaltbar sind, so daß die Säcke praktisch durch Formschluß mit den betreffenden Stangen od. dgl. an ihrem jeweiligen Ort zu Beginn des Ablegevorganges gehalten sind.

Eine besonders einfache und vorteilhafte Ausführung erhält man dabei, wenn die Stangen kreisförmigen Querschnitt aufweisen. Eine derartige Ausgestaltung empfiehlt sich insbesondere bei Papiersäcken mit pulverförmigem Inhalt, wie vor allem Zementsäcken.

Bei aus glattem und elastischem Material bestehenden Säcken mit körnigem Inhalt, wie mit Kunststoffgranulaten gefüllten Kunststoffsäcken, empfiehlt es sich demgegenüber, das Festhalteorgan an seiner Unterseite mit reibungsverstärkenden Puffern od. dgl. zu versehen, derart, daß die betreffenden Säcke durch Reibungsschluß am Ort ihrer Lage beim Beginn der Rückziehbewegung der Tragfläche festgehalten sind.

Eine funktionsmäßig besonders günstige Ausführungsform erhält man, wenn das Festhalteorgan zwei um eine quergerichtete Horizontalebene pendelnd gelagerte Druckplatten aufweist, an deren Unterseiten die den einzelnen Säcken zugeordneten Festhaltemittel angeordnet sind. Dadurch wird nämlich erreicht, daß unabhängig von evtl. unterschiedlichen Füllungsgraden der verschiedenen Säcke oder unregelmäßiger Formung derselben an den beiden Enden einer derartigen Druckplatte angeordnete Festhaltemittel gleiche Festhaltewirkung ausüben, d. h. gleichen Form- oder Reibschluß auf die ihnen zugeordneten Säcke ausüben.

Schließlich kann man jeder pendelnd gelagerten Druckplatte noch einen Anschlag derart zuordnen, daß die Druckplatte bei ihrer Aufwärtsbewegung in ihre inaktive Bereitschaftsstellung eine von der Anschlagfläche weggeneigte Stellung einnimmt, um Behinderungen beim Einlaufen bzw. Bilden der Sackverbundschicht zu vermeiden.

Die Erfindung ist nachstehend anhand der Zeichnung beispielsweise näher erläutert. Diese zeigt in

Figur 1 einen Vertikalschnitt durch eine Vorrichtung gemäß der Erfindung mit angehobenem Festhalteorgan,

Figur 2 eine Figur 1 entsprechende Darstellung mit abgesenktem Festhalteorgan und in Figur 3 eine schematische Draufsicht auf eine Vorrichtung nach den Figuren 1 und 2.

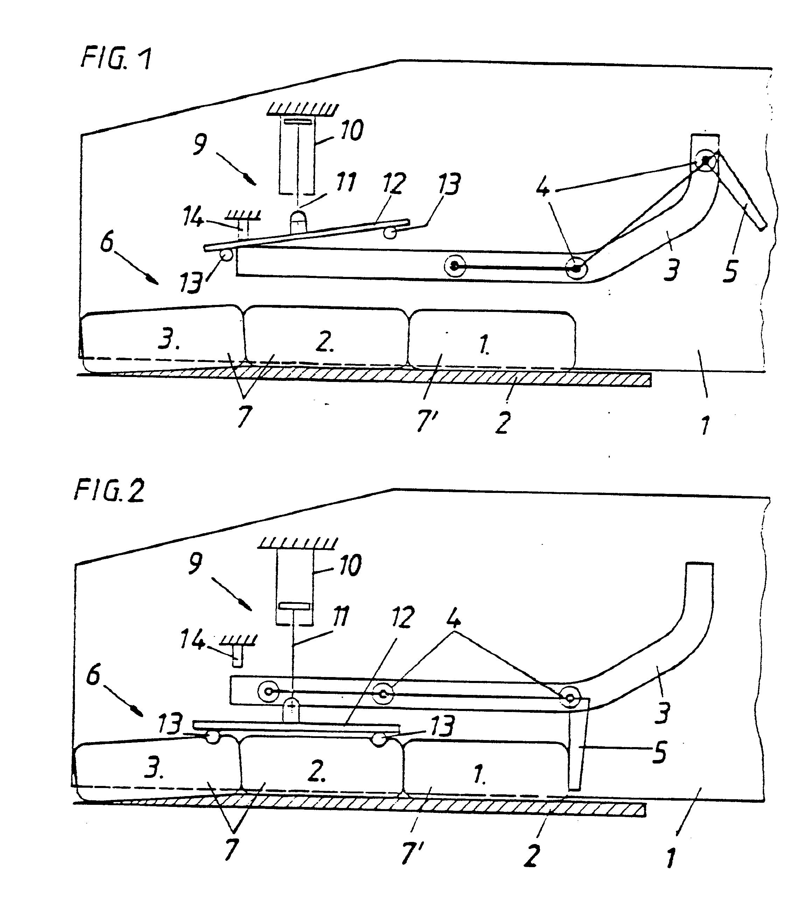

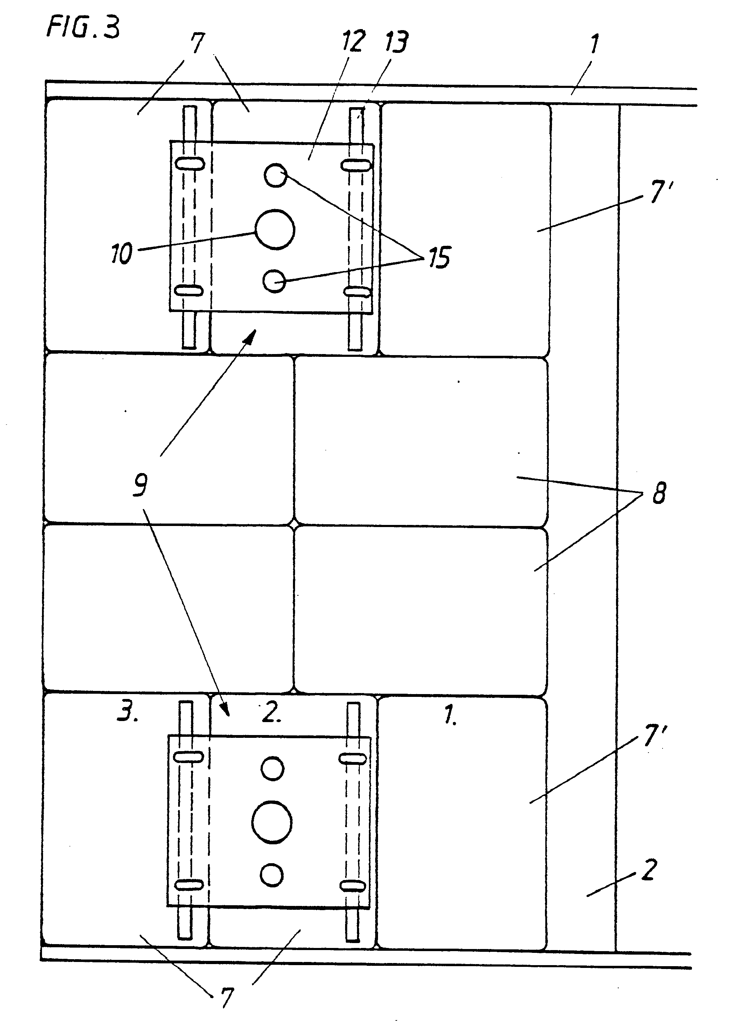

Figur 1 zeigt eine als einfaches Schiebeblech ausgebildete, an einem Rahmen mit Rahmenseitenteilen 1 in nicht näher gezeigter Weise gelagerte Tragfläche 2, die mittels einer ebenfalls nicht dargestellten Verschiebeeinrichtung aus der in Figur 1 wiedergegebenen Tragstellung nach rechts horizontal zurückgezogen und anschließend wieder in die Ausgangsstellung bewegt werden kann. Am Tragrahmen sind seitliche Führungskulissen 3 für Führungsrollen 4 vorgesehen, mit denen eine Anschlagfläche 5 in solcher Weise verbunden ist, daß die Anschlagfläche 5 in der in Figur 1 dargestellten Stellung den Weg für die Zuführung einer bereits fertig gebildeten bzw. zusammengestellten Sackverbundschicht 6 freigibt, die aus in einem bestimmten Packmuster angeordneten quergerichteten Säcken 7 und längsgerichteten Säcken 8 (s. Figur 3) zusammengestellt ist und mit der Tragfläche 2 gemeinsam in die in Figur 2 wiedergegebene Stellung bewegt wird, wobei die Anschlagfläche 5 nach dem Passieren der Sackverbundschicht 6 hinter diese schwenkt, wie Figur 2 zeigt. Insoweit entspricht die Vorrichtung dem Bekannten nach DE-A-2 713 135.

Am Rahmen ist nun gemäß der Erfindung ein insgesamt mit 9 bezeichnetes zweiteiliges Festhalteorgan angeordnet, dessen beide Teile jeweils einen druckmittelbetätigten, an einem Ende starr gelagerten Zylinder 10 aufweisen, dessen Kolbenstange 11 gelenkig mit einer Druckplatte 12 verbunden ist, an deren Unterseite an beiden Enden je eine kreisförmige Druckstange 13 befestigt ist, und zwar derart, daß sich jede Druckstange 13 oberhalb der Enden zweiter und dritter quergerichteter Säcke 7 befindet, welche der Anschlagfläche 5 zugewandt sind. Der Druckplatte 12 ist ferner noch ein am Rahmen fester Anschlag 14 derart zugeordnet, daß bei der Vertikalbewegung der Druckplatte in die in Figur 1 gezeigte inaktive Bereitschaftsstellung die Druckplatte 12 eine von der Anschlagfläche 5 weggeneigte Lage einnimmt, derart, daß die Sackverbundschicht 6 bei ihrer Bewegung mit der Tragfläche 2 in die Abgabestellung durch die Druckplatte nicht behindert wird. Wie Figur 3 zeigt, sind an jeder Druckplatte 12 ferner noch Vertikalführungen 15 angeordnet, welche mit dem Zylinder 10 auf einer gemeinsamen Querachse liegen, so daß eine Pendelbewegung der Druckplatte gewährleistet bleibt.

Jede der beiden Druckplatten 12 ist in einem Seitenbereich der Tragfläche 2 derart angeordnet, daß die Stangen 13 im Bereich der der Anschlagfläche 5 zugekehrten Enden quergerichteter seitlicher Säcke 7 liegen, und zwar nur im Bereich des zweiten und dritten quergerichteten Sackes, weil der erste Sack 7' ja unmittelbar der Anschlagfläche 5 anliegt und durch diese ausreichend formbeständig gehalten wird, weil ein Nachdrücken der folgenden Säcke der gleichen Sackreihe durch Festhalten mittels der Stangen 13 nicht zu befürchten ist.

Dabei nimmt man in Kauf, daß längsgerichtete Säcke 8, bei denen die betreffenden Staucherscheinungen weniger stark auftreten, von den seitlich angeordneten Druckplatten nicht in optimaler Stellung erfaßt werden, wenn solche bei der jeweils folgenden Sackverbundschicht die Position benachbart den Rahmenseitenteilen 1 entsprechend dem dann vorliegenden Sackmuster einnehmen.

Die Wirkungsweise der beschriebenen Vorrichtung ist wie folgt :

Sobald die Sackverbundschicht 6 mit der Tragfläche 2 in die in Figur 1 wiedergegebene Stellung gelangt ist und die Anschlagfläche 5 in die in Figur 2 gezeigte wirksame Anschlagstellung verbracht worden ist, werden die Druckmittelzylinder 10 betätigt und die Druckplatten 12 gelangen in die in Figur 2 wiedergegebene Stellung, wobei sich die kreisförmigen Druckstangen 13 in die zweiten und dritten quergerichteten Säcke 7 leicht einkerben. Darauf wird dann die Tragfläche 2 nach rechts horizontal zurückgezogen, wobei die von den Stangen 13 erfaßten quergerichteten Säcke 7 derart an Ort und Stelle gehalten werden, daß sie sich trotz der Haftreibungskräfte zwischen den Säcken und der Tragfläche nicht nach rechts in Richtung auf den der Anschlagfläche 5 anliegenden ersten, quergerichteten Sack 7' aufschieben können, vielmehr in unveränderter Form auf die unterhalb der Tragfläche 2 befindliche Ablagefläche bzw. einen dort im Aufbau befindlichen Stapel abgelegt werden.

Natürlich sind vielfache Abänderungen der gezeigten Ausführungsform möglich, ohne den Grundgedanken der Erfindung zu verlassen. So könnten anstelle durchgehender Druckstangen an den jeweiligen Druckplatten eine Anzahl von punktförmigen Vorsprüngen angeordnet sein bzw., wie eingangs schon ausgeführt, bei glatten elastischen Sackmaterialien Puffer mit reibungsverstärkenden Mitteln od. dgl. Auch kann man die Feststellmittel an den Druckplatten in Verschieberichtung der Tragfläche verstellbar anordnen, wie durch die Langlöcher in der Druckplatte 12 in Figur 3 angedeutet ist, um optimale Einstellungen bei unterschiedlichen Sackgrößen vornehmen zu können.

**Patentansprüche**

1. Vorrichtung zum Ablegen von Sackverbundschichten (6) mit einer horizontal zurückziehbaren Tragfläche (2) und einer im wesentlichen vertikal gerichteten, während des Zurückziehens der Tragfläche stationär verbleibenden Anschlagfläche (5), durch deren Wirkung die Sackverbundschicht (6) von der Tragfläche (2) bei deren horizontalem Zurückziehen abschiebbar ist, wobei oberhalb der auf der Tragfläche (2) ruhenden Sackverbundschicht (6) ein vertikal bewegliches Festhalteorgan (9) angeordnet ist, mittels dessen die Sackverbundschicht (6) bei entsprechend abgesenktem Festhalteorgan (9) während des Zurückziehens der Tragfläche (2) festhaltbar ist, dadurch gekennzeichnet, daß

a) das Festhalteorgan (9) zweiteilig ausgebildet und jeweils ein Teil in jedem Seitenbereich der Tragfläche (2) angeordnet ist, wobei die Seitenbereiche von Rahmenteilen (1) begrenzt sind, denen die seitlich äußeren Säcke der Sackverbundschicht (6) beim parallel zu den Rahmenseitenteilen (1) erfolgenden Rückziehen der Tragfläche (2) anliegen und

b) das Festhalteorgan (9) mit sich quer zur Verschiebungsrichtung der Tragfläche (2) erstreckenden Stangen (13) oder sonstigen Vorsprüngen an seiner der Sackverbundschicht (6) zugewandten Seite derart versehen ist, daß die jeweils der Anschlagfläche (5) zugewandten Endbereiche querliegender Säcke (7) mit Ausnahme des an der Anschlagfläche (5) unmittelbar anliegenden Sacks (7') durch beim Absenken der betreffenden Stangen (13) oder sonstigen Vorsprünge erfolgendes Einkerben in die betreffenden Endbereiche der Säcke (7) festhaltbar sind.

2. Vorrichtung nach Anspruch 1, dadurch gekennzeichnet, daß die Stangen (13) kreisförmigen Querschnitt aufweisen.

3. Vorrichtung nach Anspruch 1, dadurch gekennzeichnet, daß das Festhalteorgan (9) an seiner Unterseite mit reibungsverstärkenden Puffern versehen ist.

4. Vorrichtung nach einem der vorangehenden Ansprüche, dadurch gekennzeichnet, daß das Festhalteorgan (9) zwei um eine quergerichtete Horizontalachse pendelbar gelagerte Druckplatten (12) aufweist, an deren Unterseiten die den einzelnen Säcken (7) zugeordneten Stangen (13) oder sonstige Vorsprünge angeordnet sind.

5. Vorrichtung nach Anspruch 4, dadurch gekennzeichnet, daß jeder pendelnd gelagerten Druckplatte (12) ein Anschlag (14) derart zugeordnet ist, daß die Druckplatte bei ihrer Abwärtsbewegung in ihre inaktive Bereitschaftsstellung eine von der Anschlagfläche (5) weggeneigte Stellung einnimmt.

**Claims**

1. Apparatus for depositing composite layers (6) of bags, comprising a support surface (2) which can be retracted horizontally and a substantially vertically directed abutment surface (5) which remains stationary during the retraction movement of the support surface and by virtue of the action of which the layer (6) of bags can be pushed off the support surface (2) upon horizontal retraction movement thereof, wherein disposed above the layer of bags (6) which rests on the support surface (2) is a vertically movable retaining assembly (9) by means of which the layer of bags (6) can be retained, when the retaining assembly (9) is correspondingly lowered, during the retraction movement of the support surface (2), characterised in that

a) the retaining assembly (9) is of a two-part construction and a respective part thereof is arranged in each side region of the support surface (2), wherein the side regions are delimited by frame portions (1) against which bear the laterally outward bags of the layer (6), in the retraction movement of the support surface (2), which occurs parallel to the side frame portions (1), and

b) the retaining assembly (9), at its side which is towards the layer of bags (6), is provided with bars (13) or other projections, which extend transversely with respect to the direction of movement of the support surface (2), in such a way that the end regions of transversely disposed bags (7), which are respectively towards the abutment surface (5), with the exception of the bag (7') which bears directly against the abutment surface (5), can be retained by virtue of indentation into the respective end regions of the bags (7), such indentation action occurring upon downward movement of the respective bars (13) or other projections.

2. Apparatus according to claim 1 characterised in that the bars (13) are of circular cross-section.

3. Apparatus according to claim 1 characterised in that the retaining assembly (9) is provided at its underside with friction-increasing buffers.

4. Apparatus according to one of the preceding claims characterised in that the retaining assembly (9) has two pressure plates (12) which are mounted swingably about a transversely directed horizontal axis and at the undersides of which are disposed the bars (13) or other projections, which are associated with the individual bags (7).

5. Apparatus according to claim 4 characterised in that each swingingly mounted pressure plate (12) has an abutment (14) associated therewith in such a way that, upon downward movement into its inactive readiness position, the pressure plate occupies a position in which it is inclined away from the abutment surface (5).

## Revendications

1. Dispositif pour la dépose de couches composées de sacs (6), muni d'une surface d'appui (2) rétractable horizontalement et d'une surface d'arrêt (5) dirigée essentiellement verticalement, demeurant immobile pendant le retrait de la surface d'appui, surface d'arrêt par l'action de laquelle la couche composée de sacs (6) peut être déplacée de la surface d'appui (2) lors de son retrait horizontal, un organe de retenue (9) verticalement mobile étant disposé au-dessus de la couche composée de sacs (6) reposant sur la surface d'appui (2), grâce auquel la couche composée de sacs (6), lorsque l'organe de retenue (9) est dans une position basse appropriée pendant le retrait de la surface d'appui (2), peut être retenue, caractérisé en ce que :

a) l'organe de retenue (9) est constitué de deux parties, et chaque partie est disposée dans chaque zone latérale de la surface d'appui (2), les zones latérales étant limitées par des parties de châssis (1), contre lesquelles viennent en butée les sacs en position latérale externe de la couche composée de sacs (6) lors du retrait de la surface d'appui (2) s'effectuant parallèlement aux parties latérales de châssis (1), et

b) l'organe de retenue (9), muni de tiges (13) s'étendant transversalement au sens de déplacement de la surface d'appui (2) ou muni de quelconques saillies sur son côté faisant face à la couche composée de sacs (6), est équipé de telle manière que les zones d'extrémité des sacs (7) posés transversalement faisant face à la surface d'arrêt (5), à l'exception du sac (7') venant directement en butée sur la surface d'arrêt (5), peuvent être retenus grâce à l'encoche se produisant dans les zones d'extrémité correspondantes des sacs (7) lors de la descente des tiges correspondantes (13) ou des quelconques saillies.

2. Dispositif selon la revendication 1, caractérisé en ce que les tiges (13) présentent une section circulaire.

3. Dispositif selon la revendication 1, caractérisé en ce que l'organe de retenue (9) est muni sur son côté inférieur de tampons renforçant la friction.

4. Dispositif selon l'une quelconque des revendications précédentes, caractérisé en ce que l'organe de retenue (9) présente deux plaques de compression (12) montées pendulairement autour d'un axe horizontal dirigé transversalement, sur les côtés inférieurs desquels sont agencées les tiges (13) ou quelconques saillies affectées aux différents sacs (7).

5. Dispositif selon la revendication 4, caractérisé en ce qu'une butée (14) est affectée à chaque plaque de compression (12) montée pendulairement de telle manière que la plaque de compression lors de son mouvement de descente dans sa position d'attente inactive prend une position inclinée, détournée de celle de la surface d'arrêt (5).

FIG. 1

FIG. 2

FIG.3